# EUROPEAN PATENT APPLICATION

(11) **EP 2 354 820 A1**
(43) Date of publication of application: **10.08.2011**
(21) Application number: 10162551.5
(22) Date of filing: 11.05.2010
(51) Int. Cl.: G02B 6/02, C03C 25/10

(54) **Optical fiber coatings for reducing microbend losses**

(30) Priority: 04.02.2010 US 700001
(71) Applicant: OFS Fitel, LLC, Norcross GA 30071 (US)
(72) Inventor: Konstantinidis, Kariofilis, Decatur, GA 30022 (US); Garner, Harry, Lawrenceville, GA 30045 (US); Haslov, Peter, 2680, Solrod Strand (DK); Kim, Jinkee, Norcross, GA 30092 (US); Simoff, Debra, Simsbury, CT 06070 (US); Vaidya, Durgesh, Southbridge, MA 01550 (US); Arashitani, Yoshihiro, Ichihara Chiba 290-8555 (JP)
(74) Representative: Zimmermann, Tankred Klaus

(57) **Abstract**

The invention includes systems and methods for providing optical fiber coatings to reduce microbend loses. According to an example embodiment of the invention, an optical fiber is provided with properties that reduce microbend losses and polarization mode dispersion (PMD). The optical fiber (100) is characterised by a core region (102), a cladding region (104) surrounding the core region (102), a primary layer (106) surrounding the cladding region (104), wherein the primary layer (106) adheres to the cladding region (104) with a minimum pullout adhesion of 6N/cm, and a secondary layer (108) surrounding the primary layer (106), wherein the secondary layer (108) has an in-situ modulus (ISM) of about 700 MPa to about 1200 MPa at room temperature.

## Description

### FIELD OF THE INVENTION

This invention generally relates to optical fiber coatings, and in particular, to optical fiber coatings for reducing microbend losses.

### BACKGROUND OF THE INVENTION

Optical fibers are often utilized in telecommunication systems that require wide bandwidth and low transmission losses. However, mechanical forces acting on the optical fiber can create small deformations in the glass fiber pathway and can cause light propagation modes to couple into the cladding, resulting in signal losses. Furthermore, deformations in the optical fiber can create eccentricities in the fiber core and can cause propagation velocity mismatches between polarization modes in the optical fiber, which can lead to bandwidth-limiting polarization mode dispersion in the telecommunication system.

The loss mechanism in the optical fiber that is associated with very small deformations of the core occurring at length scales (along the fiber) of hundreds of microns is often referred to as "microbending." Microbend losses are typically associated with external forces acting on the optical fiber, for example, high spool tension, cable irregularities, and non-uniform pressure from surrounding objects. However, microbending can also arise from internal forces, including irregularities in the fiber coatings, and expansion coefficient mismatches between the glass core, the cladding, and the surrounding coatings.

In routine fiber installations, microbending can significantly attenuate the transmission of light in the fiber, and in some cases, the additional attenuation can be very costly. For example, transoceanic channels utilize amplifiers to regenerate attenuated light signals, and microbend losses in the fiber can necessitate an increase in the number of signal amplifying transceivers required, thereby resulting in significant added costs in terms of system components, installation, and maintenance. In some cases, microbend losses can be reduced by isolating the fiber from loss-inducing stresses. For example, a "loose tube" is often used to surround and isolate fibers from external stresses. However, not all installations can utilize the loose tube method, and therefore, the coatings applied directly to the fiber must be relied upon to provide isolation from mechanical stresses.

Optical fiber coating layers typically include an inner primary coating surrounded by a secondary coating. Conventional fiber designs have focused on reducing the Young's modulus of the primary coating layer in an effort to reduce microbend losses by reducing the stress transmitted to the glass by an external lateral force. Typical primary coating materials have been characterized by a modulus of elasticity in the range of about 50 psi to 200 psi (0.34 MPa to 1.38 MPa). The outer secondary coating layer is usually engineered to provide abrasion resistance and low friction for the coated fiber while not adding to the transmission loss of the fiber.

Numerous additional properties of the optical fibers and coatings must be engineered to meet specification and reliability targets. Optical fiber specifications are often set by individual manufacturers and/or standards bodies. Certain requirements are standardized, while other targets are individualized according to the experience of the fiber manufacturer. Example industry standards bodies governing optical fiber telecommunications include the International Telecommunication Union's Telecommunication Standardization Sector (ITU-T), the International Electrotechnical Commission (IEC), and the Telecommunications Industry Association / Electronic Industries Alliance (TIA/EIA). The standards set forth by the individual manufacturers or by the standards bodies include targets and measurement methods for determining, for example, loss, suitable strength and durability under a range of environmental conditions. Unfortunately, further attempts at reducing microbend losses by creating a more pliable primary coating can lead to durability-related issues, such as delamination and fiber buckling.

A need remains for improved optical fiber designs for reducing microbend losses.

### BRIEF SUMMARY OF THE INVENTION

Some or all of the above needs may be addressed by certain embodiments of the invention. Certain embodiments of the invention may include systems, methods, and apparatuses related to optical fiber coatings for reducing microbend losses.

According to an example embodiment of the invention, an optical fiber is provided. The optical fiber may include a core region, a cladding region surrounding the core region, a primary layer surrounding the cladding region, and a secondary layer surrounding the primary layer. The primary layer is operable to adhere to the cladding region with a minimum pullout adhesion of 6 N/cm, and the secondary layer has an in situ modulus of about 700 MPa to about 1200 MPa.

According to another example embodiment, a system for coating an optical fiber to reduce microbend losses and polarization mode dispersion is provided. The system includes a first reservoir containing a primary layer material, and a primary die for applying the primary layer to an optical fiber, wherein the optical fiber comprises a core region surrounded by a cladding region, and wherein the primary layer, once cured, adheres to the cladding region with a minimum pullout adhesion of 6 N/cm. The system also includes a second reservoir containing a secondary layer material, and a secondary die for applying the secondary layer to the primary layer, wherein the secondary layer, once cured, has an in situ modulus of about 700 MPa to about 1200 MPa at room temperature. The system may also include a curing lamp system for curing the primary and secondary layers.

According to another example embodiment, a method is provided for coating an optical fiber to reduce microbend losses and polarization mode dispersion (PMD). The method may include applying a primary layer to an optical fiber, wherein the optical fiber comprises a core region surrounded by a cladding region, applying a secondary layer to the primary layer, and curing the primary and secondary layers, wherein the cured primary layer adheres to the cladding region with a minimum pullout adhesion of 6 N/cm, and the cured secondary layer has an in situ modulus of about 700 MPa to about 1200 MPa at room temperature.

Other embodiments and aspects of the invention are described in detail herein and are considered a part of the claimed invention. Other embodiments and aspects can be understood with reference to the following detailed description, accompanying drawings, and claims.

### BRIEF DESCRIPTION OF THE FIGURES

Reference will now be made to the accompanying table, drawings, flow diagram, and charts, which are not necessarily drawn to scale, and wherein:

TABLE 1 shows experimental measurement values for example fiber according to embodiments of the invention, as well as conventional and hybrid optical fiber for comparison.

FIG. 1 is a diagram of an illustrative optical fiber with coatings according to an example embodiment of the invention.

FIG. 2 is a schematic diagram of an example pull-out test method according to an example embodiment of the invention.

FIG. 3 is a schematic diagram of an example primary coating in situ modulus test method according to an example embodiment of the invention.

FIG. 4 is a schematic diagram of an example system for coating an optical fiber, according to an example embodiment of the invention.

FIG. 5 is a flow diagram of an example method for coating an optical fiber, according to an example embodiment of the invention.

FIG. 6 is a chart of experimental microbend loss data, according to example embodiments of the invention.

### DETAILED DESCRIPTION OF THE INVENTION

Embodiments of the invention will be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout. Certain embodiments of the invention may enable a reduction in optical fiber microbend losses while maintaining durability.

Conventional methods for reducing microbend losses have been predominantly focused on reducing the modulus of the primary coating. However, reducing the modulus of the primary coating can reduce the strip force, and can cause delamination and coating separation during standard tensile strength testing, and also during handling of the optical fiber during installation. Another mentionable downside is that, if the modulus is exceedingly low when the fiber is first manufactured, it may not provide an adequate foundation to withstand later deterioration upon environmental exposure (e.g., hydrolysis during hot-water immersion or during aging at elevated temperature and humidity). Experiments related to this invention indicate that the secondary coating has as significant an effect on microbending resistance as does the primary coating. In particular, when using a higher modulus secondary coating while keeping the primary modulus the same, a microbend loss reduction of up to 50% can be achieved without compromising the overall robustness of the optical fiber.

Accordingly, certain example embodiments of the invention may provide an optical fiber primary coating with a high pullout adhesion, for example, greater than about 6 N/cm. According to example embodiments, the secondary coating may have an in situ modulus range between about 700 MPa and about 1200 MPa at room temperature. The combination of these factors imparts the desired characteristic of reducing microbend losses, without adversely creating durability issues.

According to example embodiments of the invention, the modulus of the primary and secondary coatings may also be controlled by adjusting the glass transition temperature (Tg) of the coating materials. In an example embodiment, the secondary coating may have a glass transition temperature in the range of 20 to 200 degrees Celsius to prevent spontaneous delamination of the coatings. In another example embodiment, the secondary coating may have a glass transition temperature in the range of 20 to 100 degrees Celsius.

For crosslinked polymers, the glass transition is the temperature at which a step change in mobility of the amorphous polymer occurs, such that the properties are intermediate between those of a glassy, rigid solid and those of a flexible rubber. The Tg can be characterized by a number of methods, one of which is to measure the temperature of the tan(delta) peak from a thermomechanical spectrum obtained during a dynamic viscoelastic test. Tg can be adjusted by a number of methods that affect the polymer mobility. These include adjusting the concentration of crosslinks and branches along the polymer chains, as well as adjusting the bulkiness of component groups, either along the main chain or along side branches. E.g., aromatic and cycloaliphatic hydrocarbon groups are more bulky than linear hydrocarbons, and thus result in higher Tg. A variety of other functional groups (ester, ketone, carbonate, urethane) are also bulkier than linear hydrocarbons, and thus provide a relative increase in Tg. In the opposite direction, hydrocarbon ether and siloxane-functional components have higher mobility (and thus result in lower Tg) relative to linear hydrocarbons. Tg can also be increased by increased hydrogen bonding, e.g., by increasing the content of urethane moieties that contain N-H bonds capable of attraction to electronic rich oxygens of acrylate and other carbonyl (C=O) groups. Additives that are not attached to the crosslinked network can act as plasticizers, which tend to lower the glass transition temperature. In most fiber coatings, materials are not usually added with the intention to serve as plasticizers, since the concentration of mobile species can vary uncontrollably over time/temperature due to migration or evaporation, and thus alter the coating properties. However, additives that serve other specific purposes (antioxidants; photoinitiators and photoinitiator by-products; dyes) can act as plasticizers and thus affect Tg, so their content must be controlled. Undercuring can also result in an excess of non-crosslinked components that can act as plasticizers. The Tg can also be affected by incorporation of fillers (rigid or pliable) and by addition of pigments. Fillers have not been common in most fiber coatings, because their presence itself can lead to microbending of the coated fiber. However, fillers that have dimensions that are small relative to the coating thickness may be added for specific purposes, e.g., to introduce flame retardancy or to serve as a moisture or hydrogen getter. Likewise, certain components of pigments (e.g., TiO2) may behave similar to fillers.

According to example embodiments of the invention, the modulus of the primary and secondary coatings may be controlled via the crosslink density and/or other methods. Several approaches can be used separately, or in combination, to control the coating's crosslink density. For example, in certain embodiments, reactive groups may be utilized to control UV-induced curing during drawing operations. According to other embodiments of the invention, vinyl ether end groups can cure by either free radical or cationic polymerization mechanisms. Epoxy end groups can be cured by a cationic mechanism. In other example embodiments, crosslink density may be controlled by adjusting the concentration of reactive functional groups (e.g., acrylate groups, which may be polymerized by free radical mechanism). Crosslink density may also be adjusted by modifying the relative proportions of monofunctional and di- or multi-functional monomers and oligomers. According to example embodiments, the crosslink density can also be adjusted using chain transfer agents (CTAs). The CTAs (often in the form of thiol-containing additives), have the effect of stopping one chain and starting a second chain. The result is a higher density of dangling chains (i.e., chains with only one end attached to the polymer network) and a decreased density of crosslinks.

In certain example embodiments of the invention, a higher modulus in the secondary layer may also provide heat resistance benefits. Within the class of hydrocarbon-based coatings (i.e., those composed principally of carbon, hydrogen, oxygen and nitrogen), higher modulus and higher glass transition temperature tend usually to be associated with greater thermal stability. Thus, a controlled elevation in modulus can provide an added benefit of increased heat resistance.

The design of optical fiber coatings is often a balancing act, as evidenced by the myriad of standards targets and specifications, requiring trade-offs between usability and durability. For example, fiber coatings can be characterized by a strip force test to determine the force required to remove a fiber coating. Two internationally standardized test procedures are most often referenced for the strip force test, including the IEC 60793-1-32 "Measurement methods and test procedures ― Coating strippability," and the TIA/EIA 455-178A (FOTP-178) "Measurements of strip force for mechanically removing coatings from optical fibers." According to the FOTP-178 standard, the mean peak strip force acceptable range is between 1 N and 8.9 N, under a variety of environmental conditions, for example: 0 degree Celsius, 45 degrees Celsius, 14-day 23 degree Celsius with water aging, and 30-day 85% relative humidity at 85 degrees Celsius aging. According to embodiments of the invention, the coatings may have a measurable strip force in the range of about 1 N to about 8.9 N, under the environmental conditions set forth in the GR-20 and FOTP-178 standards.

The strip force test, as specified in international standards, is a practical test for the craft-friendliness characteristic of being able to strip the coating. Yet strip force is affected by more parameters than simply coating/glass adhesion. The strip force is also affected by the secondary coating properties, such as modulus and elongation. The pullout adhesion test has been found to be a better indicator of coating/glass adhesion; it better isolates the properties of the primary coating from those of the secondary.

Another test that can be performed to assess the durability and robustness of the optical fiber coatings includes a dynamic tension test, as described in the FOTP-28 and GR-20 standards. The test includes measuring the failure stress of an optical fiber, typically at four different strain rates (0.025%, 0.25%, 2.5%, and 25%) and plotting log(failure stress) vs. log(stress rate). An "n-value" can be determined from the slope of the measurements, where n is equal to 1/slope - 1. The standards specify that the n-value should be greater than 18, but in practical applications, n-values greater than 20 are desirable. It has been experimentally determined that coatings with a low modulus and low adhesion tend to delaminate and separate during dynamic tensile testing and therefore, the low modulus and low adhesion coatings can have poor strength distributions and low n-values. Therefore, according to example embodiments of the invention, the combined properties of the primary and secondary coatings are designed to produce optical fiber with an n-value of greater than 18.

According to example embodiments of the invention, the optical fiber coating parameters may be designed to reduce microbend loss sensitivity. According to example embodiments, microbend sensitivity may be measured according to standard measurement techniques. For example, the microbend sensitivity loss may be measured according to IEC TR 62221 (1^{st} ed. 2001) "Method B" (fixed diameter drum). In this test method, a length of optical fiber is wrapped multiple times around a drum having a rough surface. The drum diameter is specified to be 400 mm and its surface is coated with a #150 mesh. A total length of 850 meters of the fiber to be measured is wound onto the coated surface of the drum in one single layer at a winding tension of 1 N, and the spectral attenuation is measured 24 hours after winding. The attenuation increase due to microbending is calculated by subtracting the intrinsic attenuation coefficient of the fiber. Measurements are performed at room temperature.

According to example embodiments of the invention, the optical fiber may have an attenuation increase due to microbending of less than or equal to 0.15 dB/km at a wavelength of 1550 nm, as measured at room temperature (23±2° Celsius). This specified microbend loss range is for ITU-G.652 matched cladding fiber having a primary coating outer diameter of about 185 microns, and a secondary coating outer diameter of about 245 microns. Other fibers designs, including multimode or ultra large effective area core (ULA) types, may be more sensitive to microbending, and therefore, a higher added loss may be acceptable.

Other parameters correlated with microbend loss for ITU G.652 matched cladding fiber are the mode field diameter and the cutoff wavelength, which together determine the MAC factor. The MAC factor may be defined as 1000 x (Mode Field Diameter at 1550 nm)/(Cutoff Wavelength)). Measurements on fibers having a MAC factor value ranging from about 6.7 to about 7.8 indicate that there is a linear relationship between added microbend loss and the MAC factor. Therefore, fibers with comparable MAC factors and core diameters should be used when performing measurements to compare microbend losses between fibers and fiber coating designs.

Various systems and methods for providing coatings to reduce polarization mode dispersion and microbend losses in optical fibers, according to example embodiments of the invention, will now be described with reference to the accompanying table and figures.

**TABLE 1**

| **Examples** | **Primary in situ Modulus (MPa)** | **Secondary in situ Modulus (MPa)** | **Microbending Added Loss at 1550nm (dB/km)** | **Pullout Adhesion (N/cm)** | **Mean Strip Force (N)** | | **n-value** |
|---|---|---|---|---|---|---|---|
| | | | | | **23°C** | **45°C** | |
| Conventional | 0.53 | 600 | 0.206 | 8.0 | 2.11 | 1.35 | 22 |
| | 0.40 | 600 | 0.180 | 7.8 | 2.32 | 1.42 | 20 |
| | 0.37 | 600 | 0.162 | 4.4 | 1.81 | 1.13 | 14 |
| Hybrid | 0.40 | 1000 | 0.079 | 4.0 | 1.76 | 1.09 | 14 |
| Embodiments of Invention | 0.40 | 1000 | 0.079 | 9.1 | 2.25 | 1.47 | 22 |
| | 0.26 | 1000 | 0.037 | 9.3 | 2.40 | 1.58 | 22 |

TABLE 1 lists experimental data showing primary coating in situ modulus (MPa), secondary coating in situ modulus (MPa), microbend loss (dB/km) measured at 1550 nm, pullout adhesion (N/cm), mean strip force (N) measured at 23°C and 45°C, and dynamic fatigue n-value for ITU G.652 fibers, and for fibers having values according example embodiments of the invention. Fibers in TABLE 1 were drawn from similar preforms, but with different primary and secondary coating formulations. The top three rows list the values for conventional optical fibers, and the bottom two rows list values for optical fibers according to example embodiments of the invention. The fourth row lists a hybrid optical fiber, for example comparisons only. Note that the hybrid optical fiber has primary and secondary in situ modulus values in accordance with ranges of the invention, but pullout adhesion value is below the (>6 N/cm) range of the invention, which results in a low n-value and mean strip force.

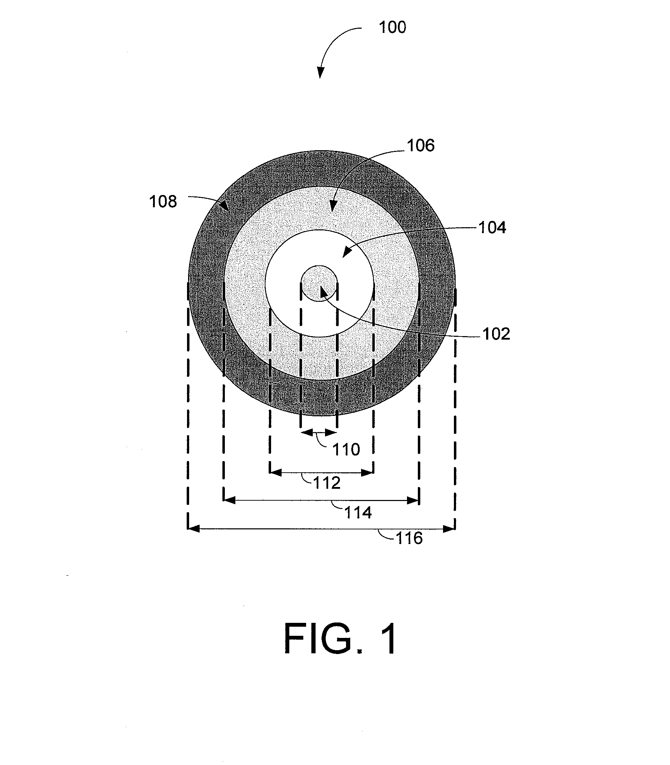

FIG. 1 illustrates a coated optical fiber 100 according to example embodiments of the invention. The optical fiber 100 may include a central core region 102 having a core diameter 110 ranging from about 2 microns to about 25 microns. In example embodiments, an 8-micron diameter core may correspond to standard single-mode optical fiber having an approximate 82 µm² effective area. In another example, a 12.5-micron diameter core may correspond to ultra large effective area (ULA) fiber having approximately a 135 µm² area core. The larger core fiber may be utilized for applications (long haul, for example) where greater optical powers are desired. In certain embodiments, the core may have a refractive index profile that is uniform (for example, step index). In other embodiments, the core may have a refractive index profile that varies gradually as a function of radial distance from the fiber center. Such embodiments include graded-index profiles, which may include power-law index profiles and parabolic index profiles.

According to example embodiments of the invention, the optical fiber core region 102 may be surrounded by and may be in intimate contact with a cladding region 104. In example embodiments, the cladding region 104 may protect the core region 102, and the cladding region 104 may comprise a refractive index lower than that of the core region 102. In certain embodiments, the cladding region 104 may comprise one or more "trench" regions where the refractive index of the cladding region 104 may be depressed near the core-cladding boundary. In certain example embodiments, the outer cladding diameter 112 may be approximately 125 microns (single-mode fiber, for example). In other example embodiments, the cladding diameter 112 may be larger or smaller than 125 microns.

According to example embodiments of the invention, a primary layer 106 may surround and may be in intimate contact with the cladding region 104. The primary layer 106 may have a primary layer outer diameter 114 greater than the cladding diameter 112. In certain embodiments, the primary layer outer diameter 114 may have an upper limit of approximately 500 microns. In certain embodiments, the primary layer 106 may have a thickness of about 10 microns to about 60 microns. In other embodiments of the invention, the primary layer may have a thickness of about 5 microns to about 500 microns. According to example embodiments of the invention, the primary layer 106 may have a minimum in situ modulus of about 0.20 MPa at room temperature. According to example embodiments of the invention, the primary layer 106 may have a maximum glass transition temperature (Tg) of approximately 20 degrees Celsius. According to example embodiments, the primary layer 106 may adhere to the cladding region 104 with a minimum pullout adhesion of 6 N/cm.

According to an example embodiment of the invention, and with continued reference to FIG. 1, the optical fiber 100 may include a secondary layer 108 that surrounds, and is in intimate contact with, the primary layer 106. According to example embodiments of the invention, the secondary layer 108 may have an outer diameter 116 of about 120 microns to about 600 microns. According to example embodiments of the invention, the ratio of the primary layer outer diameter 114 to the secondary layer outer diameter 116 is about 0.5 to about 0.8. In certain example embodiments of the invention, the secondary layer 108 may have an in situ modulus of about 400 MPa to about 2000 MPa at room temperature. In other example embodiments of the invention, the secondary layer 108 may have an in situ modulus of about 700 MPa to about 1200 MPa at room temperature. In certain embodiments, the secondary layer 108 may have a glass transition temperature (Tg) of about 20 degrees Celsius to about 200 degrees Celsius at room temperature. In other example embodiments, the secondary layer 108 may have a glass transition temperature (Tg) of about 50 degrees Celsius to about 100 degrees Celsius at room temperature. The glass transition temperature (Tg) may be set to prevent spontaneous delamination, or to prevent adhesion problems from occurring over certain tensile strain ranges, rates, and environmental conditions.

According to example embodiments, the optical fiber 100 may include one or more colored layers. In certain embodiments, the secondary layer may be colored, and may include pigments or dyes to impart a color for identification purposes. In other example embodiments, a colored layer may be applied over the non-colored secondary layer.

In example embodiments of the invention, the optical fiber 100 may be utilized in ribbon fiber. In some embodiments, the primary layer 106 and the secondary layer 108 may be selectively designed based on the position of the particular fiber within the ribbon array. For example, the end or corner fibers, which may be subjected to higher external stresses, may be designed with a higher modulus (stiffer) secondary layer 108 to reduce microbend losses and/or polarization mode dispersion (PMD).

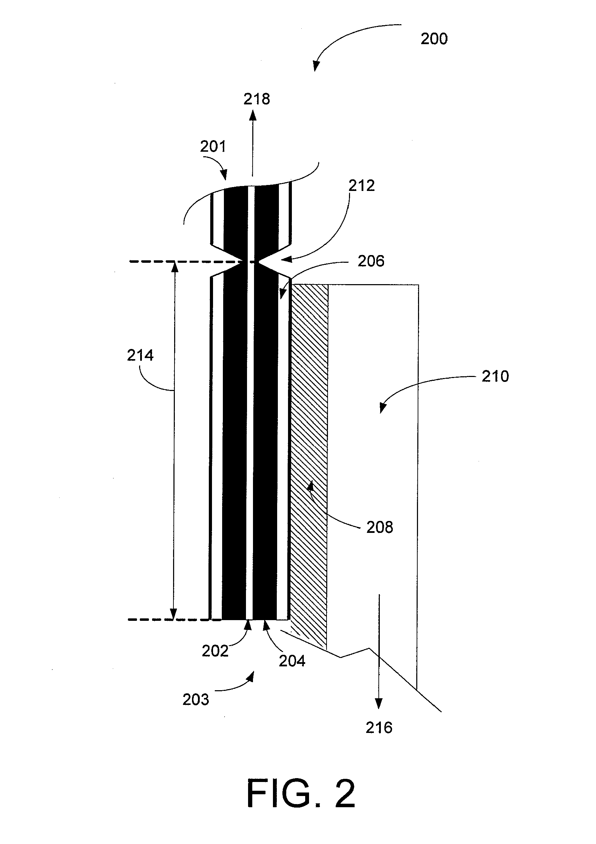

An example method for measuring the pullout adhesion, (or the limit adhesion strength) between the primary layer 204 and the core and cladding 202 of an optical fiber will now be discussed with reference to FIG. 2. According to the method, approximately 30 cm of the optical fiber may be destructively tested to perform the measurement. According to example embodiments, a nick 212 through and around the primary layer 204 and the secondary layer 206 (but not through the core and cladding 202) may be made approximately 5 cm away from the first end 201 of the fiber. Next, one side of the optical fiber may be fixed to a substrate 210 (for example, a microscope slide or sandpaper) using an adhesive 208. Then, the optical fiber attached to the substrate 210 may be cut to approximately a 10 mm length 214 between the nick 212 and the second end 203 of the fiber.

The sample may then be subjected to a to a standard testing environment (for example, 23 degrees +/- 2 degrees Celsius temperature and 50% +/- 5% relative humidity) and the first end 201 of the optical fiber may be fixed 218 while a load 216 may be applied to the substrate 210. Accordingly, the load 216 will tend to act on the adhesion boundary between the core and cladding 202 and the primary layer 204. Under these conditions, time can be measured until the core and cladding 202 is pulled out from the coating layers 204, 206. Then, the load 216 mass may be gradually changed to observe the relationship between the loading and the time taken for the core and cladding 202 to be pulled from out the surrounding coating layers. In an alternative embodiment of the test, the adhesion substrate 210 may be fixed, and the first end 201 of the optical fiber may be pulled in one direction 218 while measuring the force and displacement involved in pulling the core and cladding 202 out of the primary and secondary layers. In certain embodiments, the length 214 of primary layer 204 and cladding adhesion can be set to one centimeter, or any other convenient length of measurement.

According to example embodiments of the invention, the modulus of cured primary and secondary layers may be measured according to standard techniques. For example, the primary or secondary layer may be measured using a thin film. However, in some cases, it may be desirable to measure the modulus of the primary coating in situ (i.e., in place on the glass fiber), particularly when all that is available for measurement is a sample of the fiber. Furthermore, it is known that the modulus of the softer primary coatings tends to be lower on a glass fiber (i.e., in situ) as compared with on a film.

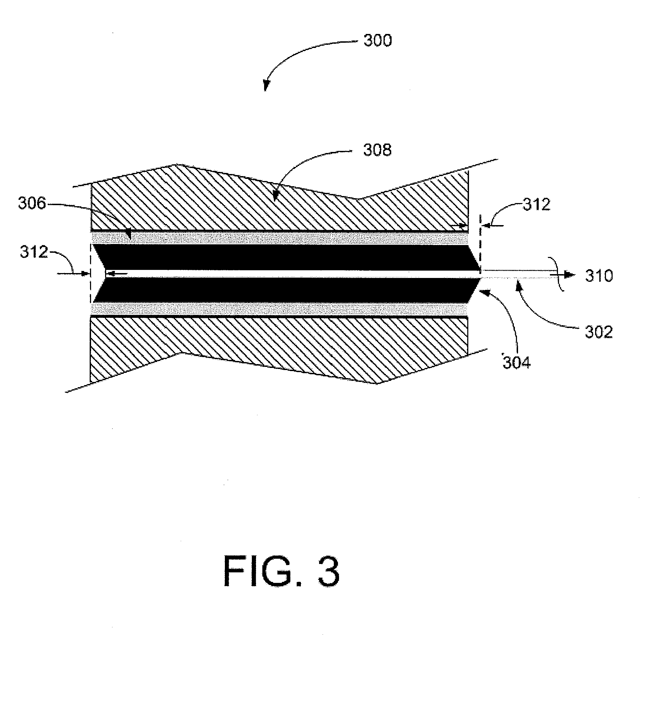

FIG. 3 depicts an example in situ modulus test method 300 for measuring the Young's modulus of the primary layer 304. According to example embodiments, a length of optical fiber, including a core and cladding 302, a primary layer 304 and a secondary layer 306 may be secured in a fiber holder or adhesive 308. The fiber holder or adhesive 308 may attach to the secondary layer 306, and in one embodiment, may surround the optical fiber. According to embodiments of the in situ modulus test method, the primary layer 304 and the secondary layer 306 may be stripped from the fiber, exposing a section of bare core and cladding 302. A pulling force 310 or stress may be applied to the bare core and cladding 302 sections, slightly deflecting 312 or straining the primary layer. The amount of deflection 312 may be measured, and the modulus of the primary layer may be calculated based on the measured pulling force 310 or stress and on the measured deflection 312 or strain.

It is known by those skilled in the art of viscoelastic characterization that "Young's modulus" measurements and "dynamic elastic modulus" measurements produce roughly equivalent values, even though Young's modulus is measured in simple extension and dynamic elastic modulus is measured using sinusoidal varying (oscillatory) strain. [Ref. J. D. Ferry, "Viscoelastic Properties of Polymers," 3rd ed., John Wiley and Sons, New York (1980).]. Either method can be used to produce similar information if confined to small strains in the elastic recoverable range, but the time-dependent or frequency-dependent strain rate must be understood. To obtain a Young's modulus measurement and/or a dynamic elastic measurement of the secondary layer, a tube-shaped sample containing only the primary and secondary layers may be obtained by pulling the core and cladding from the optical fiber in liquid nitrogen. In an example embodiment, the sample may be placed in a standard measurement device, such as a tensile tester operating in simple extension mode. According to example embodiments of the invention, the secondary modulus may be measured at a strain rate of about 4%/min. Since the primary layer has a modulus much less than that of the secondary layer, the contribution to measurement by the primary layer can usually be ignored.

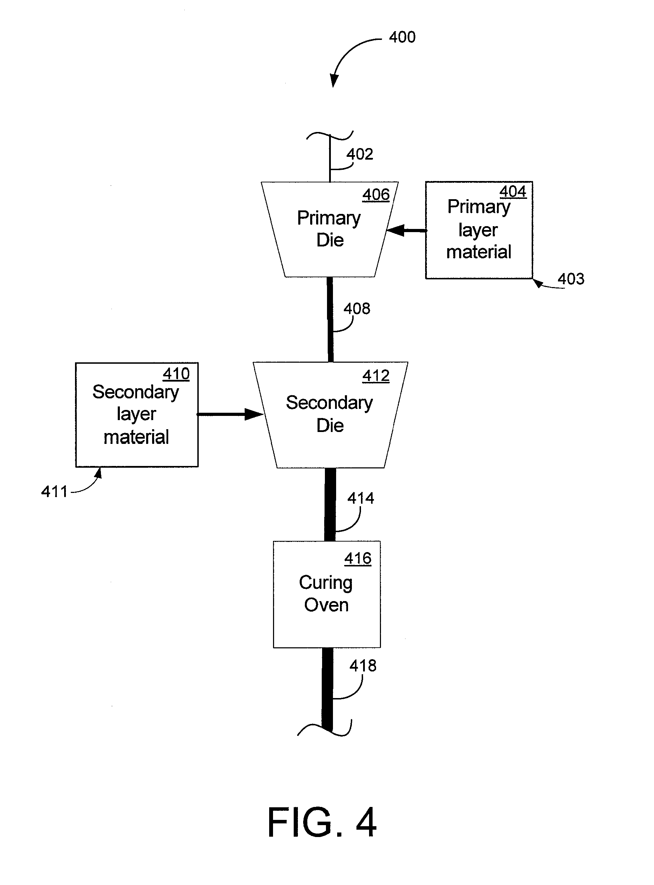

FIG. 4 depicts an in-line coating system 400, according to example embodiments of the invention. In an example embodiment of the system 400, a first reservoir 403 containing a primary layer material 404 may be connected with a primary die 406 by a hose, a pump, and/or a valve. The system 400 may also include a second reservoir 411 containing a secondary layer material 410, and the second reservoir 411 may be connected to the secondary die 412 by a hose, a pump, and/or a valve. In accordance with an embodiment of the invention, a drawn optical fiber 402 may be coated with the primary layer material 404 using the primary die 406. The resulting coated fiber 408 with a primary coating may then enter the secondary die 412 to be coated with the secondary layer material 410 to produce a drawn fiber 414 with an uncured primary coating surrounded by an uncured secondary coating. According to example embodiments of the invention, both the primary and secondary coatings may be ultraviolet (UV) curable. According to example embodiments, the secondary coating may be colored for identification purposes, or it may be non-colored. According to example embodiments, an in-line curing lamp system 416 may be included to produce a cured fiber 418 by converting the substantially liquid coatings to substantially solid layers.

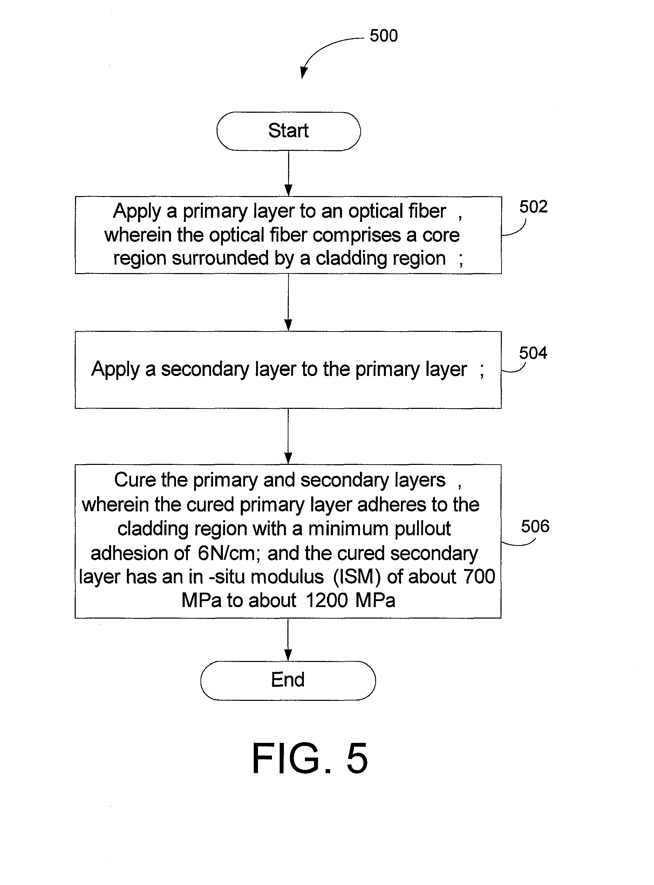

An example method 500 for coating an optical fiber to reduce microbend losses and polarization mode dispersion (PMD), will now be described with reference to the flow diagram of FIG. 5. In block 502 and according to an example embodiment of the invention, a primary layer is applied to an optical fiber, wherein the optical fiber comprises a core region surrounded by a cladding region. In block 504, and according to an example embodiment of the invention, a secondary layer is applied to the primary layer. In block 506, and according to an example embodiment of the invention, the primary and secondary layers are cured, wherein the cured primary layer adheres to the cladding region with a minimum pullout adhesion of 6 N/cm, and the cured secondary layer has an in situ modulus of about 700 MPa to about 1200 MPa.

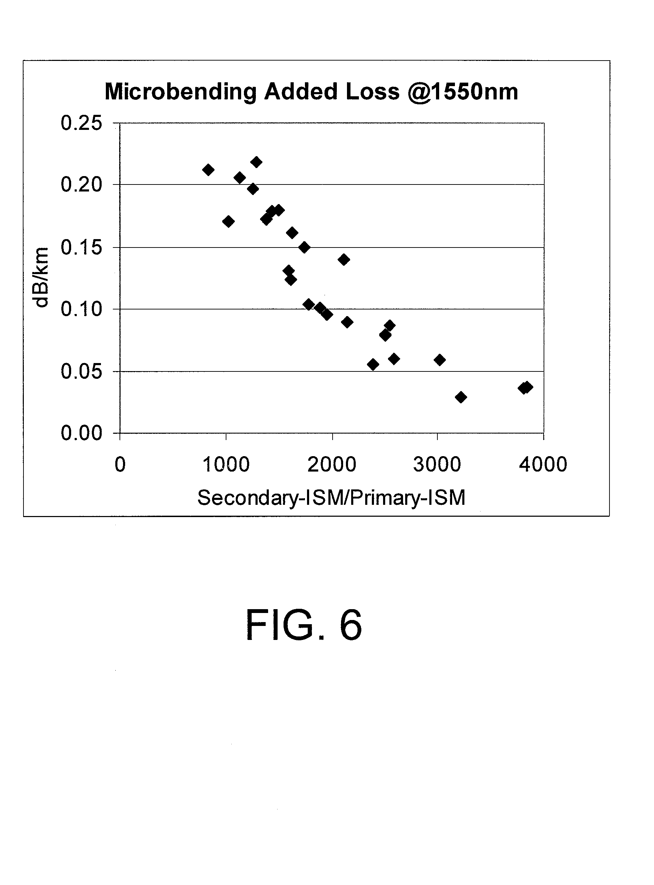

FIG. 6 is a chart of experimental data showing microbend loss (dB/km) measured at 1550 nm, for ITU G.652 fibers as a function of the ratio of the secondary in situ modulus to the primary in situ modulus. The chart indicates the trend of a reduction in the microbend losses as the ratio increases.

Accordingly, example embodiments of the invention can provide the technical effects of creating certain systems and methods that can reduce microbend losses in optical fiber. Example embodiments of the invention can provide the further technical effects of providing systems and methods for reducing polarization mode dispersion in optical fiber.

As desired, embodiments of the invention may include the optical fiber 100 and the coating system 400 with more or less of the components illustrated in FIGs. 1 and 4.

The invention is described above with reference to diagrams of systems, methods, and/or apparatuses, according to example embodiments of the invention. It will be understood that one or more of the diagrams can be implemented with the aid of computer-executable program instructions and processors. Likewise, some element of the figure and flow diagrams may not necessarily need to be performed in the order presented, or may not necessarily need to be performed at all, according to some embodiments of the invention.

While the invention has been described in connection with what is presently considered to be the most practical among various embodiments, it is to be understood that the invention is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose the invention, including the best mode, and also to enable any person skilled in the art to practice the invention, including making and using any devices or systems and performing any incorporated methods. The patentable scope of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An optical fiber (100) comprising
a core region (102);
a cladding region (104) surrounding the core region (102);
a primary layer (106) surrounding the cladding region (104), wherein the primary layer (106) adheres to the cladding region (104) with a minimum pullout adhesion of 6N/cm; and
a secondary layer (108) surrounding the primary layer (106), wherein the secondary layer (108) has an in-situ modulus (ISM) of about 700 MPa to about 1200 MPa at room temperature.

2. The optical fiber (100) of claim 1 wherein the diameter (110) of the core region (102) is about 2 microns to about 25 microns.

3. The optical fiber (100) of claim 1, wherein the secondary layer (108) has an outer diameter (116) of about 120 microns to about 600 microns.

4. The optical fiber (100) of claim 1, wherein the diameter ratio (114:116) of the primary layer (106) to the secondary layer (108) is about 0.5 to about 0.8.

5. The optical fiber (100) of claim 1, wherein the primary layer (106) has a minimum in-situ modulus (ISM) of about 0.2 MPa at room temperature.

6. The optical fiber (100) of claim 1, wherein the core region (102) comprises a refractive index profile.

7. The optical fiber (100) of claim 1, wherein the primary layer (106) has a glass transition temperature of less than about +20 degrees Celsius.

8. The optical fiber (100) of claim 1, wherein the secondary layer (108) has a glass transition temperature of about +20 degrees Celsius to about +200 degrees Celsius.

9. The optical fiber of claim 1, having a microbend attenuation increase at a wavelength of 1550 nm of less than or equal to 0.15 dB/km at room temperature.

10. A system (300) for coating an optical fiber to reduce microbend losses and polarization mode dispersion (PMD), the system comprising:
a first reservoir (403) containing a primary layer material (404), and a primary die (406) for applying the primary layer material (404) to an optical fiber (402), wherein the optical fiber (402) comprises a core region (102) surrounded by a cladding region (104), and wherein the primary layer (404), once cured, adheres to the cladding region (104) with a minimum pullout adhesion of 6N/cm;
a second reservoir (411) containing a secondary layer material (410), and a secondary die (412) for applying the secondary layer material (410) to the primary layer material (404), wherein the secondary layer material (410), once cured, has an in-situ modulus (ISM) of about 700 MPa to about 1200 MPa at room temperature; and
a curing lamp system (416) for curing the primary layer material (404) and the secondary layer material (410) applied to the optical fiber (402).
